# EUROPÄISCHE PATENTSCHRIFT

(11) **EP 0 424 309 B1**
(45) Veröffentlichungstag und Bekanntmachung des Hinweises auf die Patenterteilung: **01.09.1993**
(21) Anmeldenummer: 90810703.0
(22) Anmeldetag: 17.09.1990
(51) Int. Cl.: F16L 5/02

(54) **Dichtungs-Manschette**
Sealing collar
Manchette d'étanchéité

(30) Priorität: 28.09.1989 CH 3522/89
(43) Veröffentlichungstag der Anmeldung: 24.04.1991
(73) Patentinhaber: Huber + Suhner AG Kabel-, Kautschuk-, Kunststoffwerke, CH-8330 Pfäffikon (CH)
(72) Erfinder: Schneider, Peter, CH-8615 Wermatswil (CH); Graf, Rudolf, CH-8330 Pfäffikon (CH)
(74) Vertreter: Hepp, Dieter (DE)

(56) Entgegenhaltungen:
- EP-A- 0 240 764
- EP-A- 0 318 019
- DE-U- 8 602 375

## Beschreibung

Die Erfindung betrifft eine Dichtungs-Manschette zum Abdichten des Rohrdurchgangs in einer Maueroberfläche, gemäss Oberbegriff von Patentanspruch 1.

Dichtungs-Manschetten zum Abdecken von Rohrdurchgängen sind in Vielzahl bekannt und gebräuchlich. So beschreibt z.B. das Deutsche Gebrauchsmuster 86 02 375.6 einen elastischen Dichtflansch zum Abdichten des Zwischenraums zwischen einem Sanitärrohr und einem das Sanitärrohr beabstandet umgebenden Bauteil. Dabei ist eine Matte aus elastischem Material vorgesehen, die im mittleren Bereich eine Oeffnung besitzt. Der Durchmesser dieser Oeffnung ist kleiner als der Aussendurchmesser eines Rohrs, auf welches der Dichtflansch aufgeschoben wird. Damit liegt das elastische Bahnenmaterial unter Vorspannung dichtend am Sanitärrohr an. Es wird verhindert, dass Wasser am Rohr entlang in das Mauerwerk eindringen kann.

Die EP-A-240 764 (europäische Patentanmeldung 87 103 556.4) zeigt ein ähnliches Dichtelement zum Abdichten von Rohrdurchgängen. Das Dichtelement ist dabei als elastischer Dichtlappen ausgebildet, der in seiner Mitte eine Durchdringungsöffnung zur Rohrabdichtung aufweist. Der Dichtlappen weist einen umlaufenden Geweberand auf. Durch diesen Geweberand des Dichtlappens kann bei der Installation Dichtkleber hindurchdringen und somit eine wirksame Verbindung des Dichtlappens mit dem Mauerwerk bewirken. Auf diese Weise lässt sich der Dichtlappen vorteilhaft zwischen einem Mauerwerk und einem darüber angebrachten Belag, z.B. einem Fliesenbelag anbringen.

Der Mittelteil des Dichtlappens ist einseitig oder beidseitig mit einer die Poren verschliessenden, elastischen Kunststoffschicht beschichtet.

In der Praxis hat sich der bekannte Dichtlappen bewährt. Es hat sich jedoch gezeigt, dass er unter verschiedenen Gesichtspunkten, vor allem im Hinblick auf die Verbindung mit dem Mauerwerk und/oder dem Belag noch verbesserungsfähig ist. Es hat sich nämlich gezeigt, dass sich der Dichtlappen manchmal nur in seinem Randbereich, wo das Gewebe übersteht, zuverlässig mit dem Mauerwerk oder dem Fliesenbelag verbindet, weil die Gewebe-Poren verschlossen sind. Ausserdem kann sich vor allem beim Auftreten von Spannungen zwischen Mauerwerk und Fliesenbelag bei dem bekannten Dichtlappen die Klebeschicht lösen.

Aufgabe der Erfindung ist es, bekannte Dichtlappen oder Dichtmanschetten zu verbessern, insbesondere also eine Dichtungs-Manschette zum Abdichten eines Rohrdurchgangs zu schaffen, die sich zuverlässig mit dem Mauerwerk und/oder dem darüber angebrachten Belag verbindet und somit das Eindringen von Wasser zwischen Manschette und Mauerwerk, bzw. Manschette und Belag verhindert. Ausserdem soll die Klebeverbindung zwischen Belag und Manschette, bzw. zwischen Manschette und Mauerwerk verbessert werden, so dass sich die Verbindung auch bei auftretenden Querspannungen nicht löst. Die Manschette soll dabei einfach und kostengünstig herstellbar und verarbeitbar sein.

Erfindungsgemäss wird dies in erster Linie bei einer Dichtungs-Manschette mit den Merkmalen des kennzeichnenden Teils der Patentansprüche erreicht.

Durch das Anbringen einer faserigen Deckschicht auf beiden Seiten der Manschette lassen sich dabei auf optimal einfache Weise eine Vielzahl von vorteilhaften Merkmalen erzielen. Die faserige Deckschicht lässt sich bestens mit Klebstoffschichten oder Kittschichten verbinden, mit welchen Beläge, wie z.B. Fliesen, auf einem Mauerwerk befestigt werden. Die Verbindung erfolgt dabei über die gesamte Fläche und nicht nur entlang eines aussen vorstehenden Geweberands. Gleichermassen ist zuverlässige Verbindung mit dem Mauerwerk möglich. (Als Mauerwerk wird in dieser Beschreibung jede Art von Mauer, unabhängig vom Material verstanden, wobei auch Böden und Decken ausdrücklich eingeschlossen sind; auch dort werden in der Praxis Rohre durchgeführt und die Erfindung lässt sich vorteilhaft anwenden, unabhängig davon, ob eine solche Rohrdurchführung horizontal, vertikal oder auch schräg erfolgt).

Die faserige Deckschicht ist dabei in der Lage, gewisse Querspannungen aufzunehnmen, so dass die Verbindung auch auf Dauer zuverlässig erhalten bleibt.

Ausserdem kann eine solche Dichtungs-Manschette wesentlich wirtschaftlicher gefertigt werden: Bei einem Dichtlappen mit aussen vorstehendem Geweberand muss ersichtlicherweise jeder einzelne Dichtlappen mit einem entsprechend grösseren Gewebeteil verbunden werden. Jede solche Verbindung ist ein separater Herstellungsschritt. Die erfindungsgemässe Dichtungs-Manschette lässt sich dagegen in grossen Bahnen kontinuierlich herstellen und danach können die einzelnen Manschetten nach Mass ausgestanzt werden. Die erfindungsgemässe Manschette ist also sowohl einfacher und rationeller herstellbar, als auch einfacher und zuverlässiger im Einsatz.

Besonders vorteilhaft ist es, wenn die Deckschicht der Dichtungs-Manschette ein Vlies ist. Ein solches Vlies lässt sich besonders gut mit dem Bahnmaterial der Manschette verbinden. Es kann vorteilhaft auf dieses aufvulkanisiert oder mit diesem verklebt oder auch in die Oberfläche des weichen Bahnmaterials eingewalzt werden. Das Vlies ist ausserdem saugfähig und nimmt herkömmliche Fliesenkleber, Kitte und andere hochviscose Baukleber gut auf und sorgt ausserdem für eine gewisse Elastizität in der Grenzschicht zwischen dem Manschettenmaterial und dem Mauerwerk bzw. dem Belag. Zudem verstärkt ein in das Bahnmaterial einvulkanisiertes oder eingewalztes Vlies die Dichtmanschette wesentlich besser als ein Gewebe. Die Zugfestigkeit der Manschette wird erhöht, ohne dass die Elastizität in der Richtung von Kette und Schuss aufgehoben würde, wie dies bei Gewebeverstärkungen der Fall sein kann. Die Manschette bleibt also elastisch und dichtet entsprechend gut am Rohr, das sie mit dauerhaft durch das Vlies verstärkter Vorspannung umgibt.

Ganz besonders vorteilhaft lässt sich eine solche Manschette aus einem Gummi-Bahnmaterial herstellen, wenn die Deckschicht ein bei Vulkanisierungs-Temperatur beständiges Kunstfasermaterial ist und wenn die Deckschicht beim Vulkanisieren der Gummibahn in ihre weiche Oberfläche eingewalzt und auf diese Weise formschlüssig mit ihr verbunden wird. Dadurch wird nicht nur eine besonders gute Verbindung zwischen Vlies, d.h. also Deckschicht und Gummibahn erreicht, sondern es wird auch eine ökonomische Art der Verbindung dadurch gewährleistet, dass die Verbindung beim sowieso stattfindenden Vulkanisierprozess und ohne separaten Arbeitsvorgang auf dauerhafte Weise erfolgt.

Für bestimmte Anwendungsfälle kann statt eines Vlieses auch ein Gewebe oder ein Gewirke als Deckschicht vorgesehen werden.

Gute Einbettung in der Klebstoffschicht ergibt sich besonders, wenn die Oberfläche der Deckschicht wenigstens 0,5 mm von der Oberfläche der Manschettenseite entfernt ist, welche sie abdeckt. Dies lässt sich dadurch erreichen, dass z.B. eine Deckschicht mit einer Dicke von wenigstens 0,5 mm vorgesehen ist. Dies gilt vor allem für den Einsatz von Vliesen mit dieser Dicke.

Alternativ ist es auch denkbar, die Deckschicht nur partiell mit der Oberfläche der Manschette zu verbinden und sie im Restbereich etwas abstehen zu lassen.

Die Erfindung ist im folgenden in Ausführungsbeispielen anhand der Zeichnungen näher erläutert. Es zeigen:
- Figur 1: die schematische Darstellung einer Dichtungs-Manschette im eingebauten Zustand,
- Figur 2: eine Dichtungs-Manschette im Schnitt gemäss Linie II in Figur 3,
- Figur 3: eine Draufsicht auf die Deckschicht der Dichtungs-Manschette gemäss Figur 2,
- Figur 4a: die schematische Darstellung eines Ausschnittseiner Dichtungs-Manschette in vergrössertem Massstab,
- Figur 4b: die Dichtungs-Manschette gemäss Figur 4a im Schnitt,
- Figur 4c: einen Ausschnitt aus einer Dichtungs-Manschette gemäss Figur 4a und 4b im eingebauten Zustand, und
- Figur 5: die schematische Darstellung eines abgewandelten Ausführungsbeispiels einer Dichtungs-Manschette im Schnitt.

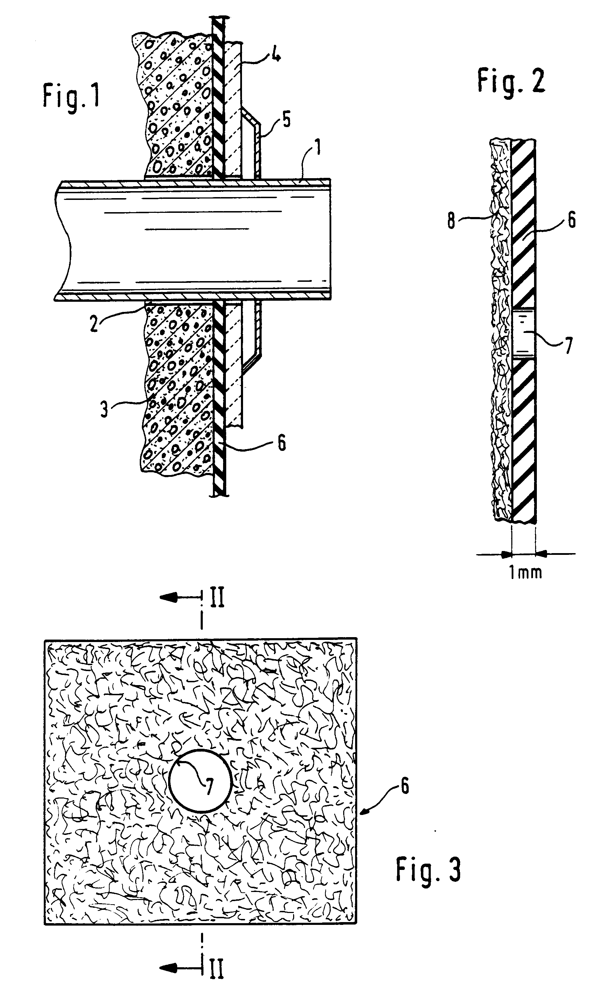

Gemäss Figur 1 ist ein Rohr 1 in einem Durchbruch 2 einer Wand 3 angeordnet. Die Wand 3 ist mit einem Belag 4 aus Fliesen abgedeckt, wobei im Bereich des Durchbruchs durch den Belag 4 eine bekannte Abdeck-Rosette 5 vorgesehen ist.

Um das Eindringen von Wasser durch die Rosette und die Oeffnung im Belag 4 in das Mauerwerk der Wand 3 zu verhindern, ist zwischen dem Belag 4 und der Wand 3 eine Dichtungs-Manschette 6 angebracht. Die Dichtungs-Manschette 6 ist auf ihrer Rückseite mit einem Dichtkleber mit der Wand 3 verbunden, während sie auf ihrer Vorderseite mit einem Dichtkleber mit den Fliesen des Belags 4 verklebt ist.

Wie aus Fig. 2 und 3 ersichtlich ist, ist die Manschette 6 mit einer Oeffnung 7 versehen, welche einen etwas kleineren Durchmesser aufweist als das Rohr 1. Die Manschette 6 ist aus einem elastischen Kunststoff (Gummi) gefertigt, so dass sie dichtend und mit elastischer Vorspannung am Rohr 1 anliegt und das Eindringen von Wasser in den Durchbruch 2 bzw. das Mauerwerk der Wand 3 verhindert. Auf die Oberfläche der Manschette 6 ist ein Vlies 8 aufgebracht, das aus Polyester-oder Glasfasern besteht. Das Vlies 8 und die Manschette 6 sind jeweils etwa 1 mm dick. Das Vlies 8 verbindet sich besonders gut mit Dichtkleber und ist ausserdem beim Einbau komprimierbar, d.h. es passt sich auch unebenen Oberflächen gut an und gleicht Unregelmässigkeiten aus. Die Manschette 6 ist beidseitig mit einem Vlies 8 beschichtet (nicht dargestellt), so dass sich besonders gute Ergebnisse hinsichtlich Verbindung mit dem Mauerwerk einerseits und einem Fliesen-oder Kunststoffbelag andererseits erzielen. Das Vlies 8 lässt sich dabei z.B. auch derart grobporig oder strukturiert ausbilden, dass als Belag auf der Manschette eine Mörtelschicht angebracht werden kann, die sich fest mit dem Vlies 8 verbindet. Dementsprechend lassen sich die Vliesdicke, die Faserstärke und andere Parameter des Vlieses jeweils an den Anwendungsfall anpassen. Besonders vorteilhaft lässt sich dabei die erfindungsgemässe Manschette herstellen, wenn bei Verwendung einer Gummischicht als Manschette die Deckschicht beim Vulkanisieren in die Oberfläche des erhitzten Gummis eingepresst, insbesondere eingewalzt wird. Wesentlich ist dabei, dass als Material für die Deckschicht Fasern verwendet werden, die oberhalb der Vulkanisierungstemperatur hitzebeständig sind.

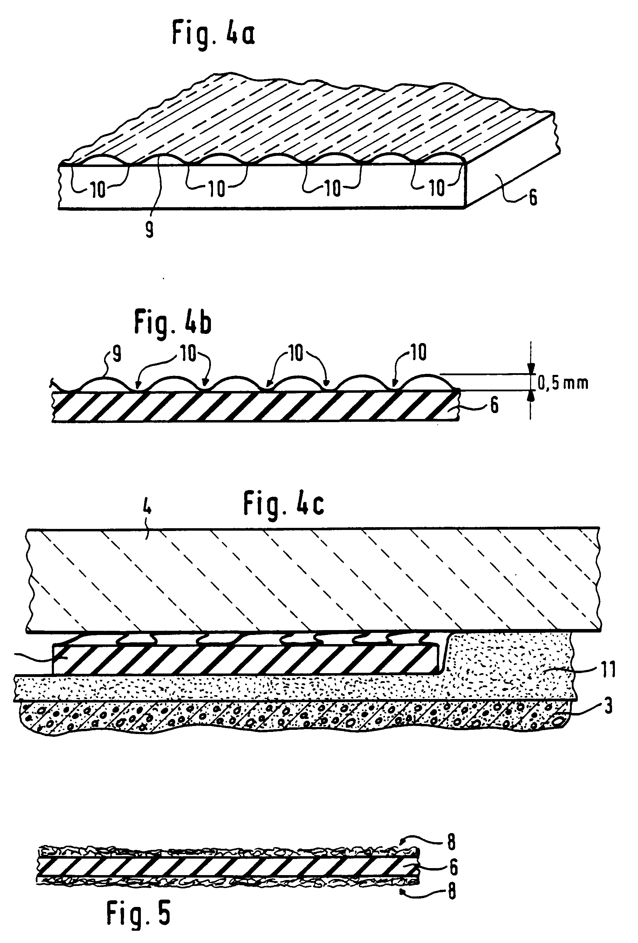

Fig. 4a und 4b zeigen ein abgewandeltes Ausführungsbeispiel, bei welchem auf eine Manschette 6 ein Gewebe 9 linienförmig entlang von Klebebahnen 10 aufgeklebt ist. Zwischen den Klebebahnen 10 steht das Gewebe 9 wellenförmig von der Oberfläche der Manschette 6 ab. Das Gewebe 6 ist dabei offenporig, so dass beim Bestreichen mit Dichtkleber oder Mörtel dieser durch die Gewebebahn 9 bis auf die Oberfläche der Dichtungsmanschette 6 durchdringen kann. Dadurch ergibt sich ebenfalls eine hervorragende Verbindung der Manschette 6 mit einer Mauer-Oberfläche oder einem Belag.

Fig. 4c zeigt dabei, wie im eingebauten Zustand die Wellen des Gewebes 9 zusammengepresst werden und sich der Oberfläche des Belags 4 anpassen. Auf ihrer Rückseite ist die Manschette 6 in einer Schicht 11 eines Dichtklebers eingebettet und mit der Wand 3 verbunden.

Statt eines Gewebes 9 lässt sich auch ein Gewirke, ein Geflecht oder eine andere Deckschicht verwenden, deren Oberfläche zur Aufnahme von Dichtkleber, Mörtel oder anderen Baustoffen geeignet ist und die Bildung eines formschlüssigen Verbunds mit der Manschette 6 ermöglicht.

## Patentansprüche

1. Flächige Dichtungsmanschette aus einem elastischen Material zum Abdichten des Rohrdurchgangs in einer Mauer-Oberfläche, die mit einem Belag abgedeckt ist, wobei die Manschette mit ihrer einen Oberfläche mit dem Mauerwerk und mit der anderen Oberfläche mit dem Belag verbindbar ist und wobei die Manschette mit einer Öffnung zum Durchführen des Rohrs versehen ist, dadurch gekennzeichnet, dass beide Oberflächen der Manschette (6) mit einer faserigen oder offenporigen Deckschicht (8, 9) versehen sind.

2. Dichtungs-Manschette nach Anspruch 1, dadurch gekennzeichnet, dass die Deckschicht (8) ein Vlies ist.

3. Dichtungs-Manschette nach Anspruch 1, dadurch gekennzeichnet, dass die Deckschicht (9) ein Gewebe oder ein Gewirke ist.

4. Dichtungs-Manschette nach einem der vorangegangenen Ansprüche, dadurch gekennzeichnet, dass die Deckschicht (8, 9) einvulkanisiert oder aufgeklebt ist.

5. Dichtungs-Manschette nach einem der vorangegangenen Ansprüche, dadurch gekennzeichnet, dass die Oberfläche der Deckschicht (8, 9) wenigstens 0,5 mm von der Oberfläche der Manschetten-Seite entfernt ist, welche sie abdeckt.

6. Dichtungs-Manschette nach einem der vorangegangenen Ansprüche, dadurch gekennzeichnet, dass die Deckschicht (8, 9) wenigstens 0,5 mm dick ist.

7. Dichtungs-Manschette nach einem der vorangegangenen Ansprüche, dadurch gekennzeichnet, dass die Deckschicht (8, 9) ein aus Kunstfasern gefertigtes Material ist.

8. Dichtungs-Manschette nach einem der vorangegangenen Ansprüche, dadurch gekennzeichnet, dass die Manschette (6) ein Gummi-Lappen ist, dass die Deckschicht (8, 9) aus einem bei Vulkanisier-Temperatur beständigen Kunstfasermaterial besteht, und dass die Deckschicht beim Vulkanisieren des Gummi-Lappens in diesen eingewalzt wird.

9. Dichtungs-Manschette nach Anspruch 9, dadurch gekennzeichnet, dass die Deckschicht aus elastomerem Material, insbesondere Ethylen-Propylene-Dien-Terpolymeren besteht.

## Claims

1. Flat sealing collar, which is covered with a coating, of an elastic material for sealing of a pipe aperture in the surface of a wall, the collar being able to be connected with its one surface with the wall and with the other surface with the coating, and the collar being provided with an opening for leading through of the pipe, characterized in that both surfaces of the collar (6) are provided with a fibrous or open-pored outer layer (8, 9).

2. Sealing collar according to claim 1, characterized in that the outer layer is a nonwoven fabric.

3. Sealing collar according to claim 1, characterized in that the outer layer (9) is a woven fabric or a knitted fabric.

4. Sealing collar according to one of the preceding claims, characterized in that the outer layer (8, 9) is vulcanized or glued on.

5. Sealing collar according to one of the preceding claims, characterized in that the surface of the outer layer (8, 9) is at least 0,5mm apart from surface of the side of the collar which it covers.

6. Sealing collar according to one of the preceding claims, characterized in that the covering layer (8, 9) is at least 0,5mm thick.

7. Sealing collar according to one of the preceding claims, characterized in that the outer layer (8, 9) is a material which is made from artificial fibres.

8. Sealing collar according to one of the preceding claims, characterized in that the collar (6) is a rubber tab, that the outer layer (8, 9) comprises an artificial fiber material which is resistant to vulcanising temperatures, and that the outer layer is rolled into the rubber tab during vulcanisation of said rubber tab.

9. Sealing collar according to claim 9, characterized in that the outer layer comprises an elastomer material, in particular Ethylene-Propylene-Diene-Terpolymers.

## Revendications

1. Garniture d'étanchéité plane réalisée en un matériau élastique et destinée à rendre étanche le passage de tuyau dans une surface murale recouverte d'un revêtement, étant précisé que la garniture est apte à être reliée, par une surface, à l'ouvrage de maçonnerie et, par l'autre surface, au revêtement, et qu'elle est pourvue d'une ouverture pour le passage du tuyau, caractérisée en ce que les deux surfaces de la garniture (6) sont pourvues d'une couche de recouvrement fibreuse ou à pores ouverts (8, 9).

2. Garniture d'étanchéité selon la revendication 1, caractérisée en ce que la couche de recouvrement (8) est un non-tissé.

3. Garniture d'étanchéité selon la revendication 1, caractérisée en ce que la couche de recouvrement (9) est un tissu ou un tissu à mailles.

4. Garniture d'étanchéité selon l'une des revendications précédentes, caractérisée en ce que la couche de recouvrement (8, 9) est insérée par vulcanisation ou collée.

5. Garniture d'étanchéité selon l'une des revendications précédentes, caractérisée en ce que la surface de la couche de recouvrement (8, 9) est éloignée d'au moins 0,5 mm de la surface du côté de la manchette qu'elle couvre.

6. Garniture d'étanchéité selon l'une des revendications précédentes, caractérisée en ce que la couche de revêtement (8, 9) fait au moins 0,5 mm d'épaisseur.

7. Garniture d'étanchéité selon l'une des revendications précédentes, caractérisée en ce que la couche de recouvrement (8, 9) consiste en un matériau réalisé à partir de fibres synthétiques.

8. Garniture d'étanchéité selon l'une des revendications précédentes, caractérisée en ce que la garniture (6) consiste en une patte en caoutchouc, en ce que la couche de recouvrement (8, 9) se compose d'un matériau de fibres synthétiques résistant à la température de vulcanisation, et en ce que la couche de recouvrement est insérée par cylindrage, lors de la vulcanisation de la patte de caoutchouc, dans celle-ci.

9. Garniture d'étanchéité selon la revendication 9, caractérisée en ce que la couche de recouvrement se compose d'un matériau élastomère, notamment de terpolymères éthylène-propylène-diène.
